# EUROPÄISCHE PATENTSCHRIFT

(11) **EP 0 506 988 B1**
(45) Veröffentlichungstag und Bekanntmachung des Hinweises auf die Patenterteilung: **09.06.1999**
(21) Anmeldenummer: 91105138.1
(22) Anmeldetag: 30.03.1991
(51) Int. Cl.: G06F 13/374

(54) **Verfahren zur Busarbitration eines Multimastersystems**
Method of bus arbitration in a multi-master system
Méthode d'arbitrage d'un système à maîtres multiples

(43) Veröffentlichungstag der Anmeldung: 07.10.1992
(73) Patentinhaber: Micronas Intermetall GmbH, 79108 Freiburg (DE)
(72) Erfinder: Désor, Hans-Jürgen, Dipl.-Ing., W-7803 Gundelfingen 2 (DE); Mehrgardt, Sönke, Dr.rer.nat., W-7806 March-Neuershausen (DE)

(56) Entgegenhaltungen:
- EP-A- 0 139 569
- WO-A-87/00658
- US-A- 4 334 288
- US-A- 4 468 738

## Beschreibung

Die Erfindung betrifft ein Verfahren zur Busarbitration eines Multimastersystems, das mehrere auf einen globalen Datenbus zugreifende Master und mehrere auf einen globalen Identifikationsbus zugreifende Busarbiter aufweist, bei dem ein jeder an der Busarbitration eines Buszuteilungszyklusses teilnehmende Busarbiter ein Busanforderungssignal auf den Identifikationsbus legt, das ein k Bit breites, die Priorität des dem Busarbiter zugewiesenen Masters repräsentierendes Identifikationswort enthält, bei dem in einem jeden Priorisierungsschritt des Buszuteilungszyklusses auf dem Identifikationsbus durch eine logische Verknüpfung gleichwertiger Bits der Identifikationsworte ein logischer Pegel erzeugt wird, und bei dem in einem jeden Priorisierungsschritt der logische Pegel des Identifikationsbusses mit den korrespondierenden Bits der Identifikationsworte verglichen wird.

Ein derartiges Verfahren zur Busarbitration eines Multimastersystems ist bekannt. In einem jeden Priorisierungsschritt des Buszuteilungszyklusses überträgt jeder aktive Busarbiter sämltiche k Bits seines Identifikationswortes auf den k Bit breiten Identifikationsbus. Durch die logische Verknüpfung gleichwertiger Bits der übertragenen Identifikationsworte werden parallel k logische Pegel erzeugt, die anschließend von den Busarbitern des Multimastersystems zurückgelesen werden. Beginnend mit dem höchstwertigen Bit der Identifikationsworte werden sukzessive die einzelnen logischen Pegel des Identifikationsbusses mit den entsprechenden Bits verglichen. Jeder Busarbiter ersetzt dann - beginnend mit dem niedrigstwertigen 0-Bit seines Identifikationswortes, dem ein logischer Pegel von 1 auf dem Identfikationsbus gegenübersteht - alle niederwertigeren 1-Bits des Identifikationswortes durch 0-Bits. In einem zweiten Priorisierungsschritt des Buszuteilungszyklusses werden die derart entstandenen modifizierten Identifikationsworte anstelle der ursprünglichen Identifikationsworte auf dem Identifikationsbus übertragen und analog wie im ersten Priorisierungsschritt verarbeitet. Dieses iterative Verfahren zur Busarbitration wird dann solange fortgesetzt, bis sich auf dem Identifikationsbus k logische Pegel einstellen, die mit den k Bits eines des ursprünglichen Identifikationswortes eines aktiven Busarbiters übereinstimmen. Dieser Busarbiter erzeugt daraufhin ein Gewährungssignal, daß seinem Master anzeigt, daß er den globalen Datenbus übernehmen kann.

Dieses bekannte Verfahren besitzt eine Reihe von Nachteilen, welche sich ungünstig auf den hardwaremäßigen Aufbau sowie auf die Arbeitsgeschwindigkeit des Multimastersystems auswirken: Zur Durchführung der Busarbitration ist es erforderlich, daß in einem jeden Priorisierungsschritt parallel sämtliche k Bits eines jeden Identifikationswortes auf den k Bit breiten Identifikationsbus gelegt werden. Die zur hardwaremäßigen Realisierung eines derartig breiten Identifikationsbusses erforderlichen k Pegelleitungen verkomplizieren den Aufbau des Multimastersystems beträchtlich und bringen Probleme bei der Verdrahtung der Busarbiter des Multimastersystems mit sich, da diese über ebenfalls k Bit breite Busarbiter-Anschlüsse mit dem Identifikationsbus verbunden werden müssen. Diese Problematik führt insbesondere dann zu äußerst negativen Konsequenzen, wenn der Identifikationsbus als Bestandteil einer integrierten Schaltung ausgeführt sein soll.

Die beim bekannten Verfahren in einem jeden der Priorisierungsschritte eines Buszuteilungszyklusses erforderliche Parallelverarbeitung sämtlicher k Bits der Identifikationsworte erlaubt es in besonders nachteiliger Art und Weise nicht, die Busarbitration mehrerer aufeinanderfolgender Buszuteilungszyklen überlappend durchzuführen. Dies bedingt eine langsame Arbeitsgeschwindigkeit des Multimastersystems, da zwischen zwei aufeinanderfolgenden Zuteilungen des globalen Datenbusses jeweils eine zur Busarbitration eines Buszuteilungszyklusses erforderliche Priorisierungszeit verstreicht, welche beim bekannten Verfahren - bei einem k Bit breiten Identifikationswort - gleich der Zeitdauer ist, die zur Durchführung der hierzu erforderlichen k Priorisierungsschritte eines Buszuteilungszyklusses notwendig ist.

In US 4,468,738 ist ein Busarbitrationsverfahren mit zugehöriger Schaltung beschrieben, die den Datenaustausch räumlich auseinanderliegender Datenverarbeitungseinrichtungen, z.B. von Computern, ermöglichen. Der konfliktfreie Zugriff aller Teilnehmer auf den vorhandenen Datenbus erfolgt mittels einer zusätzlichen logischen Adresse, die den jeweiligen Daten vorangestellt wird und eine Prioritätsinformation enthält. Die Auswertung dieser logischen Adressen findet innerhalb eines einzigen Verarbeitungstaktes statt, wobei jedoch eine serielle Verarbeitung nach Wertigkeiten zeitlich sicher eingehalten werden muß.

In US 4,334,288 ist für ein Computer- oder Kommunikationssystem ein Busarbitrierungsverfahren mit zugehöriger Schaltung beschrieben, bei der jedem Teilnehmer eine Prioritätsnummer zugeteilt ist, die auch als Adresse dient. Alle Nummern befinden sich in entsprechenden Teilnehmerspeichern und die einzelnen Arbitrierungsstufen vergleichen bitweise nach fallenden Wertigkeiten die empfangene Adresse und geben dann den Teilnehmer mit der höchsten Priorität frei. Auch hier muß der Arbitrierungsvorgang innerhalb eines einzigen Verarbeitungstaktes stattfinden.

Zur Vermeidung der oben angeführten Nachteile stellt sich die Erfindung die Aufgabe, die bekannten Verfahren zur Busarbitration derart weiter zu entwickeln, daß die Busarbitration des Multimastersystems auch bei hohen Taktraten einfach und sicher durchführbar ist. Außerdem soll ein Busarbiter und ein Prioritätsdetektor für ein nach dem erfindungsgemäßen Busarbitrationsverfahren arbeitendes Multimastersystem geschaffen werden.

Diese Aufgabe wird durch das erfindungsgemäße Verfahren derart gelöst, daß die k Bits der Identifikationsworte der an der Busarbitration des Buszuteilungszyklusses teilnehmenden Busarbiter zeitlich versetzt auf den Identifikationsbus gelegt werden, daß in einem jeden Priorisierungsschritt des Buszuteilungszyklusses jeweils nur diejenigen Bits der Identifikationsworte auf den Identifikationsbus gelegt werden, die eine gleiche binäre Wertigkeit aufweisen, und daß in jedem Priorisierungsschritt des Buszuteilungszyklusses diejenigen Busarbiter aus der Busarbitration dieses Buszuteilungszyklusses ausscheiden, bei denen das in diesem Priorisierungsschritt auf den Identifikationsbus gelegte Bit des eigenen Identifikationswortes nicht mit dem logischen Pegel des Identifikationsbusses übereinstimmt.

Das erfindungsgemäße Verfahren besitzt den Vorteil, daß es eine besonders einfache hardwaremäßige Ausführung des Multimastersystems erlaubt: Zur erfindungsgemäßen Durchführung der Busarbitration ist lediglich ein Identifikationsbus erforderlich, der besonders vorteilhaft nur ein Bit breit ist, also aus einer einzigen Pegelleitung besteht. Die durch die zeitlich gestaffelte Übertragung der einzelnen Bits der Identifikationsworte erreichte drastische Reduktion der erforderlichen Pegelleitungen resultiert daher in einer beträchtlichen Vereinfachung des hardwäremäßigen Aufbaus des Identifikationsbusses. Der sich auf dem Identifikationsbus einstellende logische Pegel wird vorteilhafterweise mittels einer "verdrahteten-ODER"-Verknüpfung bzw. einer "verdrahteten-UND"-Verknüpfung gebildet, welche die Ausgänge der einzelnen Master des Multimastersystems über die Pegelleitungen des Identifikationsbusses logisch zusammenschaltet.

Eine bevorzugte Ausführungsform des erfindungsgemäßen Verfahrens sieht vor, daß simultan mehrere Priorisierungsschritte mehrerer zeitlich aufeinanderfolgender Buszuteilungszyklen durchgeführt werden, indem auf je einer Pegelleitung des Identifikationsbusses durch eine logische Verknüpfung der im jeweiligen Priorisierungsschritt des betreffenden Buszuteilungszyklusses übertragenen Bits der Identifikationsworte jeweils ein logischer Pegel erzeugt wird. Die bevorzugte Ausführungsform des erfindungsgemäßen Verfahrens erlaubt es dann in besonders vorteilhafter Art und Weise, eine Busarbitration mit überlappenden Buszuteilungszyklen durchzuführen. Die erfindungsgemäßen Maßnahmen bewirken, daß die zur Busarbitration eines Buszuteilungszyklusses erforderliche Priorisierungszeit drastisch reduziert wird, wodurch in vorteilhafter Art und Weise eine höhere Arbeitsgeschwindigkeit des Multimastersystems erreicht wird.

Eine vorteilhafte Weiterbildung der Erfindung sieht vor, daß - bei einem k Bit breiten Identifikationswort - simultan k Priorisierungsschritte von k aufeinanderfolgenden Buszuteilungszyklen durchgeführt werden. Diese erfindungsgemäßen Maßnahmen resultieren in einer weiteren Steigerung der Arbeitsgeschwindigkeit des Multimastersystems, da die zur Busarbitration eines Buszuteilungszyklusses erforderliche Priorisierungszeit noch weiter verringert wird: Zwischen zwei aufeinanderfolgenden Buszuteilungen von zwei aufeinanderfolgenden Buszuteilungszyklen vergeht jeweils nunmehr die Zeitspanne, welche zur Durchführung eines einzigen Priorisierungsschrittes erforderlich ist. Dadurch wird in besonders vorteilhafter Art und Weise eine - gegenüber dem bekannten Verfahren - k-fach höhere Arbeitsgeschwindigkeit erreicht.

Weitere Einzelheiten der Erfindung sind dem Ausführungsbeispiel zu entnehmen, welches im folgenden anhand der Zeichnungen beschrieben wird. Es zeigen:
- Figur 1: ein Ausführungsbeispiel eines Multimastersystems,
- Figur 2: eine schematische Darstellung einer ersten Ausführungsform des Verfahrens zur Busarbitration,
- Figur 3: eine schematische Darstellung einer bevorzugten Ausführungsform des Verfahrens zur Busarbitration,
- Figur 4: ein Busarbiter des Ausführungsbeispiels,
- Figur 5: ein Prioritätsdetektor des Ausführungsbeispiels.

Der einfacheren und prägnanteren Notation halber wird in der anschließenden Beschreibung des Ausführungsbeispiels folgende Konvention bezüglich der Bezeichnung der Komponenten des Multimastersystems sowie der von ihnen erzeugten oder verarbeiteten Signale verwendet: Die Komponenten bzw. Signale werden mit Großbuchstaben bezeichnet. Eine den Großbuchstaben nachgestellte Ziffer bzw. ein Kleinbuchstabe bezeichnen eine bestimmte Komponente des Multimastersystems (z.B. M1 = erster Master aus der Gesamtmenge der Master M des Multimastersystems). Eine Bezeichnung ohne eine nachgestellte Ziffer bzw. ohne einen Kleinbuchstaben weist auf eine beliebige Komponente bzw. Signal oder auf die Gesamtheit dieser Komponenten bzw. Signale hin.

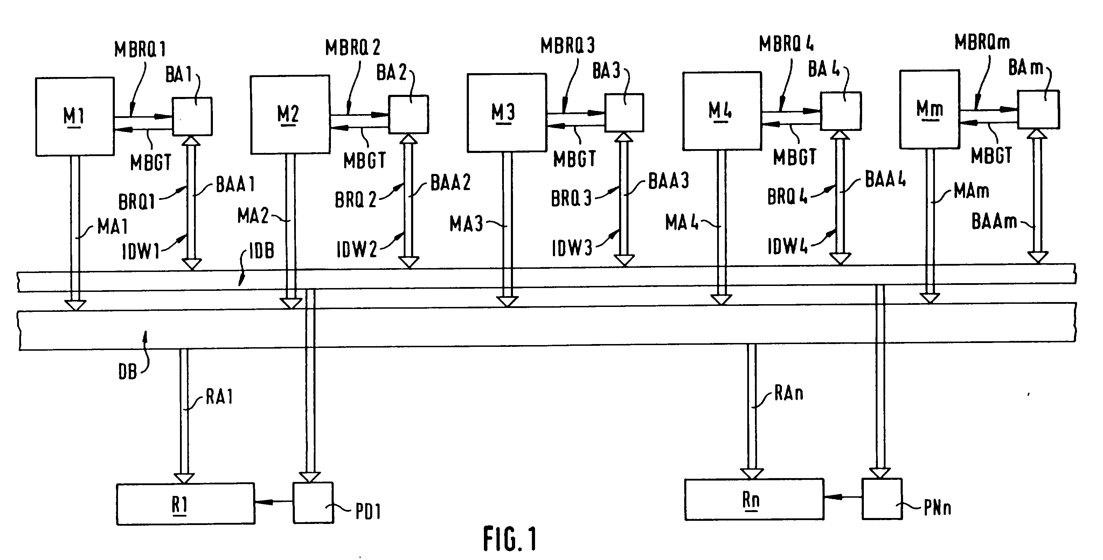

Die Fig. 1 stellt ein Multimastersystem dar, bei dem mehrere Master M1-Mm über je einen uni- oder bidirektionalen Master-Anschluß MA1-MAm auf einen gemeinsamen Datenbus DB zugreifen. Jedem Master M1-Mm ist ein Busarbiter BA1-BAm zugeordnet, welcher jeweils über einen bidirektionalen Busarbiter-Anschluß BAA1-BAAm mit einem Identifikationsbus IDB verbunden ist.

Will ein Master M auf den Datenbus DB zugreifen, so meldet er diese Busanforderung durch ein Busanforderungssignal MBRQ (master bus request) bei seinem Busarbiter BA an. Der Busarbiter BA sendet daraufhin ein Anforderungssignal BRQ (bus request) an den Identifikationsbus IDB. Das Anforderungssignal BRQ enthält ein Identifikationswort IDW, welches die dem Master M zugewiesene Priorität charakterisiert. Legen mehrere Busarbiter BA währen eines Buszuteilungszyklusses BZ simultan ihre Anforderungssignale BRQ auf den Identifkationsbus IDB, so ist eine Busarbitration erforderlich, damit dem Master M mit der ausgezeichneten (höchsten bzw. niedrigsten) Priorität der Datenbus DB zugeteilt wird. Diese Busarbitration wird weiter unten noch eingehend erläutert werden. Der Busarbiter BA des durch die Busarbitration priorisierten Masters M erzeugt daraufhin ein Gewährungssignal MBGT (master bus grant), welches er seinem Master M zuleitet. Dieser übernimmt daraufhin den Datenbus DB und führt seine Datenübertragung aus.

An den globalen Datenbus DB des Multibussystems sind über jeweils einen uni- oder bidirektionalen Empfänger-Anschluß RA1-RAn eine Anzahl von Empfängern R1-Rn angeschlossen. Jeder Empfänger R weist einen Prioritätsdetektor PD auf, der das auf dem Identifkationsbus IDB übertragene Identifikationswort IDW des priorisierten Masters M empfängt und dieses auswertet: Der Prioritätsdetektor PD entscheidet, ob die vom priorisierten Master M auf dem Datenbus DB übertragenen Daten für seinen Empfänger R bestimmt sind oder ob die auf dem Datenbus DB übertragenen Daten vom Empfänger R ignoriert werden sollen.

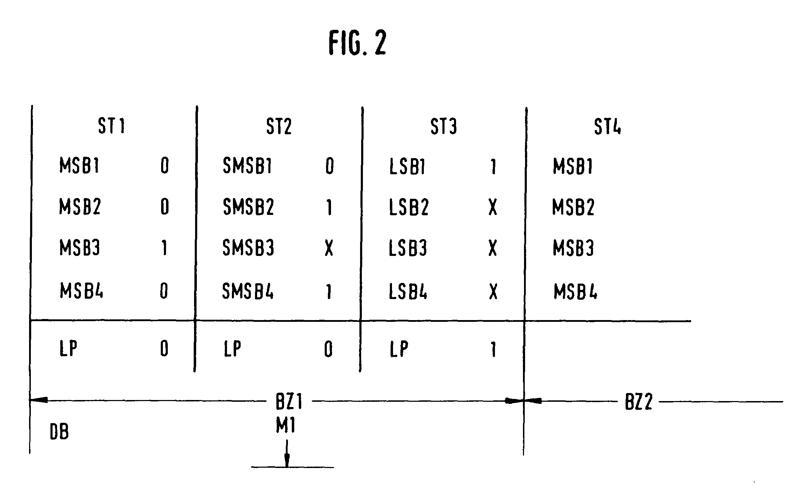

Die bei dem oben beschriebenen Multimastersystem gemäß einer ersten Ausführungsform des Verfahrens verwendete Busarbitration wird anhand der Fig. 2 erläutert. Diese zeigt in schematischer Darstellung die während der einzelnen Priorisierungsschritte eines Buszuteilungszyklusses stattfindenden Priorisierungsoperationen. Jeder Priorisierungsschritt dauert genau einen Takt eines die Signalverarbeitung steuernden Systemtaktes ST. Der einfacheren Erläuterung halber wird - beispielhaferweise - angenommen, daß in einem ersten Buszuteilungszyklus BZ1 vier Master M1-M4 mittels entsprechender Busanforderungssignale MBRQ1-MBRQ4 ihre Busarbiter BA1-BA4 auffordern, über Anforderungssignale BRQ1-BRQ4 einen Zugriffswunsch auf den gemeinsamen Datenbus DB anzumelden. Desweiteren wird angenommen, daß dem ersten (zweiten, dritten, vierten) Master M1 (M2, M3, M4) die Priorität 1 (2, 6, 3) zugeordnet ist. Das k=3 Bit breite erste (zweite, dritte, vierte) Identifikationswort IDW1 (IDW2, IDW3, IDW4) des Masters M1 (M2, M3, M4) lautet daher 001 (010, 110, 011).

Das beschriebene Verfahren zur Busarbitration des Multimastersystems geht davon aus, daß die Busarbiter BA1-BA4 des Multimastersystems durch eine "verdrahtete-UND"-Verknüpfung derart miteinander verknüpft sind, daß auf dem Identifikationsbus IDB die logische 0 gegenüber der logischen 1 dominiert, dies wird im folgenden als "wired-AND-Verknüpfung" der Busarbiter-Anschlüsse bezeichnet. Demzufolge wird stets derjenige Master M priorisiert, welcher die niedrigste Priorität aufweist.

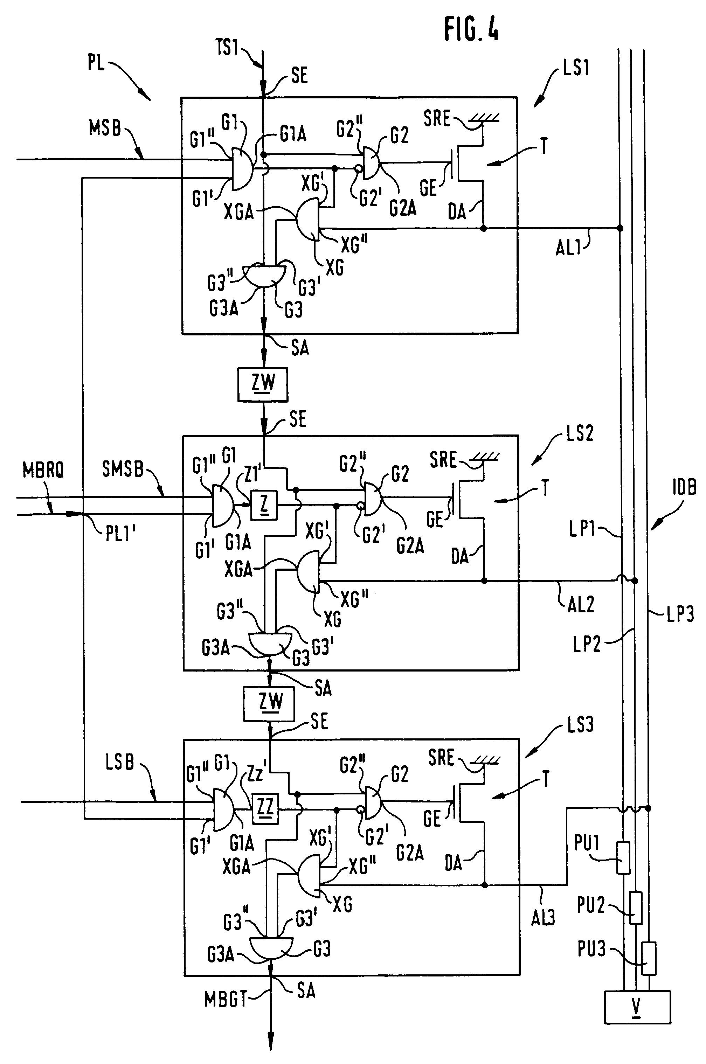

Die Busarbitration verläuft nun wie folgt: In einem ersten Priorisierungsschritt des ersten Buszuteilungszyklusses BZ1 - also während eines ersten Taktes ST1 des die Signalverarbeitung des Multimastersystems steuernden Systemtaktes ST - legen die am ersten Buszuteilungszyklus BZ1 teilnehmenden, von ihren Mastern M1-M4 über entsprechende Busanforderungssignale MBRQ1-MBRQ4 aktivierte Busarbiter BA1-BA4 die höchstwertigen Bits MSB1-MSB4 der Identifikationsworte IDW1-IDW4 auf den ein Bit breiten, also nur eine einzige Pegelleitung LP1 (s.Fig. 4) aufweisenden Identifikationsbus IDB. Die wired-AND-Verknüpfung (siehe dazu Fig. 4) der Busarbiter-Anschlüsse BAA1-BAA4 bewirkt, daß der Identifikationsbus IDB den logischen Pegel LP=0 einnimmt. Jeder Busarbiter BA1-BA4 vergleicht den logischen Pegel LP=0 des Identifikationsbusse IDB mit dem höchstwertigen Bit MSB1-MSB4 seines Identifikationswortes IDW1-IDW4. Stimmt das höchstwertige Bit MSB1-MSB4 des entsprechenden Identifikationswortes ID1-ID4 mit dem logischen Pegel LP=0 des Identifikationsbusses IDB nicht überein, so koppelt sich der betreffende Busarbiter BA1-BA4 vom Identifikationsbus IDB ab. Er scheidet damit aus der Busarbitration aus und nimmt an den folgenden Priorisierungsschritten des ersten Buszuteilungszyklusses BZ1 nicht mehr teil. In dem hier dargestellten Fall stimmt das höchstwertige Bit MSB3 des Identifikationswortes IDW3 mit dem logischen Pegel LP=0 des Identifikationsbusses IDB nicht überein. Der Busarbiter BA3 und somit der Master M3 nehmen daher am zweiten Priorisierungsschritt des ersten Buszuteilungszyklusses BZ1 nicht mehr teil. Diese Situation wird in der Fig. 2 durch ein "X" angedeutet.

Im zweiten Priorisierungsschritt - also während des zweiten Systemtakts ST2 - werden von den im ersten Priorisierungsschritt noch nicht ausgeschiedenen Busarbiter BA1, BA2 und BA4 die zweit-höchstwertigen Bits SMSB1=0, SMSB2=1 und SMSB4=1 der Identifikationsworte IDW1, IDW2 und IDW4 auf den Identifikationsbus IDB gelegt. Der Identifikationsbus IDB nimmt nun den logischen Pegel LP=0 ein. Das zweit-höchstwertige Bit SMSB2 bzw. SMSB4 des zweiten bzw. des vierten Identifikationswortes IDW2 bzw. IDW4 stimmt mit dem logischen Pegel LP=0 des Identifikationsbusses IDB nicht mehr überein. Die Busarbiter BA2 und BA4 und somit die Master M2 und M4 scheiden daher aus der Busarbitration des ersten Buszuteilungszyklusses BZ1 aus.

Im dritten Priorisierungsschritt - also während des dritten Systemtakts ST3- ist nur mehr der Busarbiter BA1 an der Busarbitration beteiligt. Das niedrigstwertige Bit LSB1=1 des ersten Identifikationswortes IDW1 wird auf den Identifikationsbus IDB gelegt. Da bereits alle anderen Master M2-M4 aus der Busarbitration ausgeschieden sind, nimmt der Identifikationsbus den logischen Pegel LP=1 an. Dieser logische Pegel stimmt mit dem binären Wert des niedrigstwertigen Bit LSB1=1 überein: Der Busarbiter BA1 erzeugt eine Gewährungssignal MBGT1, welches dem Master M1 zugeleitet wird. Dieser übernimmt nun den Datenbus DB.

Die Verallgemeinerung dieses Verfahrens auf den allgemeinen Fall eines k Bit breiten Identifikationswortes IDW ist es für den Fachmann leicht durchführbar: Im ersten Priorisierungsschritt des k Priorisierungsschritte umfassenden ersten Buszuteilungszyklusses BZ1 werden - analog wie oben - die höchstwertigen Bits MSB der Identifikationsworte IDW der an diesem Buszuteilungszyklus BZ1 teilnehmenden Busarbiter BA auf den Identifiaktionsbus IDB gelegt. Durch einen Vergleich der höchstwertigen Bits MSB der Identifikationsworte IDW mit dem sich auf dem Identifikationsbus IDB im ersten Priorisierungsschritt einstellenden logischen Pegel LP werden alle Busarbiter BA aus der Busarbitrations des Buszuteilungszyklusses ausgeschlossen, deren höchstwertiges Bit MSB mit dem logischen Pegel nicht übereinstimmt. In den darauffolgenden k-1 Priorisierungsschritten wird analog wie im ersten Priorisierungsschritt verfahren, wobei anstelle der höchstwertigen Bits MSB jeweils das in seiner Wertigkeit nächstniedrigere Bit der Identifikationsworte IDW derjenigen Busarbiter BA, welche in den vorangehenden Priorisierungsschritten des ersten Buszuteilungszyklusses BZ1 noch nicht ausgeschieden sind, auf den Identifikationsbus IDB gelegt werden. Im letzten, also im k-ten Priorisierungsschritt des ersten Buszuteilungszyklusses BZ1, in dem maximal zwei Busarbiter BA noch aktiv sind, erzeugt derjenige der beiden Busarbiter, bei dem der binäre Wert des niedrigstwertigen Bits LSB seines Identifikationswortes IDW mit dem durch die logische Überlagerung der beiden niedrigstwertigen Bits LSB entstehenden logischen Pegel LP des Identifikationsbusses IDB übereinstimmt, daß Gewährungssignal MBGT.

Bei der obigen Beschreibung der ersten Ausführungsform des Verfahrens zur Busarbitration eines Multimastersystems wurde angenommen, daß - entsprechend der wired-AND-Verknüpfung der Busarbiter-Anschlüsse BA - demjenigen Master M der gemeinsame Datenbus DB zugeteilt werden soll, der die niedrigste Priorität aufweist. Das beschriebene Verfahren kann aber auch dergestalt modifiziert werden, daß die Busarbitration den Master mit der höchsten Priorität favorisiert. In diesem Fall ist es lediglich erforderlich, die wired-AND-Verknüpfung der Busarbiter-Anschlüsse BA durch eine "verdrahtete-ODER"-Verknüpfung (= wired-OR-Verknüpfung) zu ersetzen. Die einzelnen Priorisierungsschritte des oben beschriebenen Verfahrens können dann unverändert übernommen werden.

Diese erste Ausführungsform des Verfahrens erlaubt vorteilhafterweise einen äußerst einfachen hardwaremäßigen Aufbau des Multimastersystems: Die zeitlich gestaffelte Übertragung gleichwertiger Bits bewirkt, daß der Identifikationsbus IDB bedeutend einfacher ausgelegt ist als bei dem bekannten Verfahren, bei dem in jedem Priorisierungsschritt simultan sämtliche k Bits jedes der Identifikationsworte in den Signalverarbeitungsprozeß der Busarbitration eingehen: Zur Durchführung des beschriebenen Verfahrens ist daher nur ein Identifikationsbus IDB mit einer einzigen Pegelleitung erforderlich.

Die zur Busarbitration erforderliche Priorisierungszeit des beschriebenen Verfahrens beträgt - wie beim bekannten Verfahren - k Takte ST1-STk des die Signalverarbeitung des Multimastersystems steuernden Systemtakts ST. In besonders vorteilhafter Art und Weise wird daher die für die Busarbitration eines einzelnen Buszuteilungszyklusses erforderliche Priorisierungszeit trotz des drastisch vereinfachten hardwaremäßigen Aufbaus des Identifikationsbusses IDB nicht verlängert.

Eine bevorzugte Ausführungsform des beschriebenen Verfahrens erlaubt eine Busarbitration mit überlappenden Buszuteilungszyklen, wodurch eine drastische Verringerung der Priorisierungszeit möglich wird: Die für die Busarbitration eines Buszuteilungszyklusses erforderliche Priorisierungszeit wird um den Faktor k verkürzt, so daß die Arbeitsgeschwindigkeit des Multimastersystems - im Vergleich zu dem bekannten Verfahren - um den Faktor k erhöht wird.

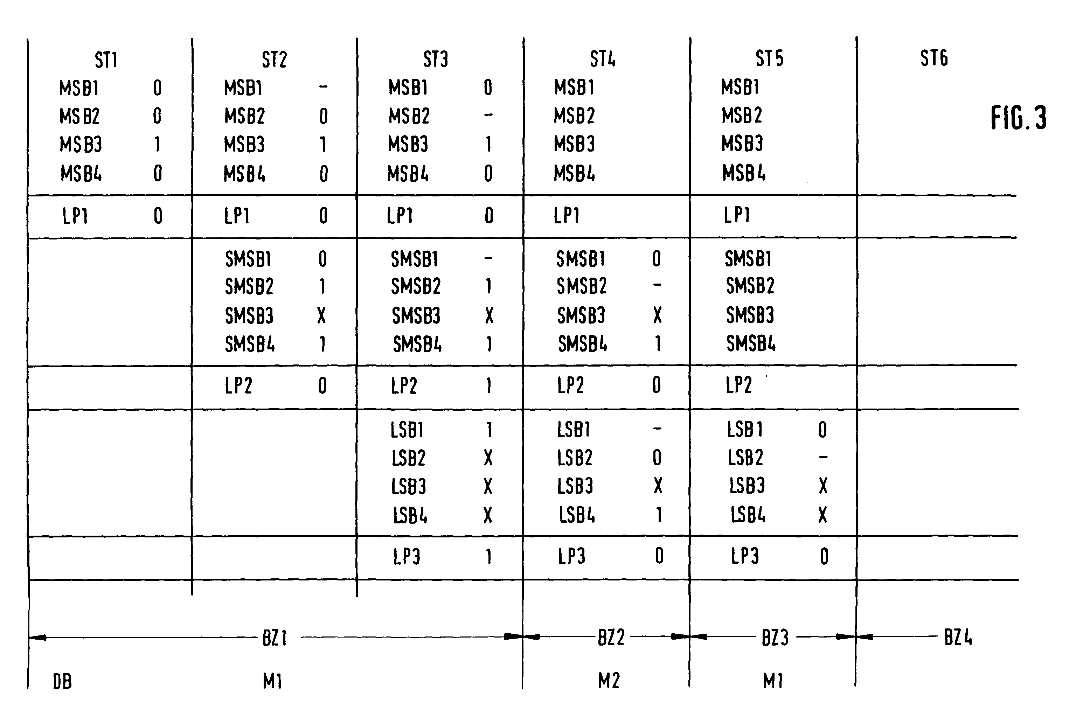

Zur Illustration der in Fig. 3 schematisch dargestellten Vorgangsweise wird angenommen, daß im ersten Buszuteilungszyklus BZ1 - analog wie oben - die Master M1-M4 auf den gemeinsamen Datenbus DB zugreifen wollen. In einem zweiten Buszuteilungszyklus BZ2 melden die Master M2, M3 und M4 ihren Zugriffswunsch auf den Datenbus DB an. In einem dritten Buszuteilungszyklus BZ3 wollen die Master M1, M2 und M3 auf den Datenbus DB zugreifen, etc..

Die nachstehend beschriebene bevorzugte Ausführungsform des Verfahrens erfordert bei einem drei (allgemein: k) Bit breiten Identifikationswort IDW einen ebenso breiten Identifikationsbus IDB, der folglich drei (allgemein: k) Pegelleitungen LP1, LP2 und LP3 (s.Fig. 4) aufweist. Die Busarbitration verläuft nun wie folgt:

In einem ersten Systemtakt ST1 - also im ersten Priorisierungsschritt des ersten Buszuteilungszyklus BZ1 - werden die höchstwertigen Bits MSB1-MSB4 der Identifikationsworte IDW1-IDW4 auf die erste Pegelleitung LP1 des Identifikationsbusses IDB gelegt, auf der sich - den obigen Annahmen entsprechend - der logische Pegel LP1=0 einstellt.

In einem zweiten Systemtakt ST2 - also im zweiten Priorisierungsschritt des ersten Buszuteilungszyklusses BZ1 bzw. in einem ersten Priorisierungsschritt des zweiten Buszuteilungszyklusses BZ2 - werden die zweit-höchstwertigen Bits SMSB1, SMSB2 und SMSB4 der noch an der Busarbitration des ersten Buszuteilungszyklusses BZ1 teilnehmenden Busarbiter BA1, BA2 und BA3 auf die zweite Pegelleitung LP2 des Identifikationsbusses IDB gelegt, auf der sich der logische Pegel LP2=0 einstellt. Die Busarbiter BA2 und BA3 und somit der Master M2 und M3 scheiden daher aus der Busarbitration des ersten Buszuteilungszyklusses BZ1 aus.

Gleichzeitig zur Verarbeitung der zweit-höchstwertigen Bits SMSB der an der Busarbitration des zweiten Priorisierungsschrittes des ersten Buszuteilungszyklusses BZ1 teilnehmenden Busarbiter BA1, BA2 und BA4 wird der erste Priorisierungsschritt des zweiten Buszuteilungszyklusses BZ2 durchgeführt: Die in diesem zweiten Buszuteilungszyklus BZ2 aktiven Busarbiter BA2, BA3 und BA4 legen das höchstwertige Bit MSB2-MSB4 der Identifikationsworte IDW2-IDW4 auf die erste Pegelleitung LP1 des Identifikationsbusses IDB. Auf dieser stellt sich der logische Pegel LP1=0 ein, wodurch der Master M3 aus der Busarbitration des zweiten Buszuteilungszyklusses BZ2 ausscheidet.

Im dritten Systemtakt ST3 - also im dritten Priorisierungsschritt des ersten Buszuteilungszyklus BZ1 bzw. im zweiten Priorisierungsschritt des zweiten Buszuteilungszyklusses BZ2 bzw. in einem ersten Priorisierungsschritt des dritten Buszuteilungszyklusses BZ3 - finden im Multimastersystem folgende Signalverarbeitungsoperationen statt: Der Busarbiter BA1 legt das niedrigstwertige Bit LSB1 des ersten Identifikationswortes IDW1 auf die dritte Pegelleitung LP3 des Identifikationsbusses IDB und erhält am Ende des dritten Systemtaktes ST3 den Datenbus DB zugeteilt.

Gleichzeitig wird der zweite Priorisierungsschritt des zweiten Buszuteilungszyklusses BZ2 durchgeführt: Die Busarbiter BA2 und BA4 legen die zweit-höchstwertigen Bits SMSB2 und SMSB4 auf die zweite Pegelleitung LP2 des Identifikationsbusses IDB, auf der sich der logische Pegel LP2=1 einstellt: Im zweiten Priorisierungsschritt des zweiten Buszuteilungszyklusses BZ2 scheidet keiner der beiden an der Busarbitration des zweiten Buszuteilungszyklusses BZ2 teilnehmenden Master M2 und M4 aus, da der auf der zweiten Pegelleitung LP2 durch die Überlagerung der zweit-höchstwertigen Bits SMSB2 und SMSB4 entstehende logische Pegel LP2=1 mit jedem der beiden Bits SMSB2 und SMSB4 übereinstimmt.

Außerdem findet während des dritten Systemtaktes ST3 der erste Priorisierungsschritt des dritten Buszuteilungszyklusses BZ3 statt.

Die im vierten Systemtakt ST4 stattfindende Signalverarbeitung ist - unter Zuhilfenahme der Beschreibung der in den ersten drei Systemtakte ST1-ST3 ablaufenden Busarbitration - aus der Fig. 3 leicht ersichtlich und braucht deshalb nicht im einzelnen beschrieben zu werden.

In einem fünften Systemtakt ST5 findet simultan zum zweiten Priorisierungsschritt des vierten Buszuteilungszyklusses BZ4 (in Fig. 3 nicht mehr explizit dargestellt) und zu einem - ebenfalls nicht mehr explizit dargestellten - ersten Priorisierungsschritt eines fünften Buszuteilungszyklusses BZ5 der dritte und somit letzte Priorisierungsschritt des dritten Buszuteilungszyklusses BZ3 statt.

Der weitere Ablauf der dezentralisierten Busarbitration mit überlappenden Buszuteilungszyklen ist dem Fachmann aus der obigen Beschreibung der ersten fünf Systemtakte ST1-ST5 klar ersichtlich, weshalb sich weitere Ausführungen an dieser Stelle erübrigen.

Die herausragende Eigenschaften dieser bevorzugten Ausführungsform des Busarbitrationsverfahrens besteht in der äußerst kurzen Priorisierungszeit, welche - mit Ausnahme der allerersten, drei (k) Systemtakte ST1-ST3 (ST1-STk) dauernden Priorisierungszeit des ersten Buszuteilungszyklusses BZ1 - jeweils immer nur einen einzigen Systemtakt ST dauert.

In Fig. 4 ist eine in einem jeden Busarbiter BA des Multimastersystems enthaltene Priorisierungslogik PL dargestellt: Diese dient zur Durchführung der beschriebenen Signalverarbeitungsoperationen der Busarbitration. Die in Fig. 4 dargestellte Priorisierungslogik PL ist für ein drei Bit breites Identifikationswort IDW ausgelegt. Dies schränkt die Allgemeingültigkeit der nachfolgenden Überlegungen bezüglich des Aufbaus und der Funktionsweise der Priorisierungslogik PL in keiner Weise ein, da alle wesentlichen Eigenschaften auch aus der gezeigten Ausgestaltung der Priorisierungslogik PL ersichtlich sind.

Das vom Master M erzeugte Busanforderungssignal MBRQ wird einem Eingang PL' der Priorisierungslogik PL zugeführt, mit dem drei weitgehend identisch aufgebaute Logikschaltungen LS1, LS2 und LS3 verbunden sind. Die erste Logikschaltung LS1 weist ein erstes UND-Gatter G1 auf, dessen ersten Eingang G1' das am Eingang PL' anliegende Busanforderungssignal MBRQ zugeführt wird. An einem zweiten Eingang G1'' des ersten UND-Gatters G1 liegt das höchstwertige Bit MSB des Identifikationswortes IDW an. Ein Ausgang G1A des ersten UND-Gatters G1 ist mit einem invertierenden ersten Eingang G2' eines zweiten UND-Gatters G2 sowie mit einem ersten Eingang XG' eines NEXOR-Gatters XG verbunden. An einem zweiten Eingang G2'' des zweiten UND-Gatters G2 liegt ein über einen Steuereingang SE der ersten Logikschaltung LS1 zugeführtes Steuersignal TS1 an. Das an einem Ausgang G2A des zweiten UND-Gatters G2 auftretende Ausgangssignal wird zu einem Gate-Eingang GE eines FET-Transistors T geführt, dessen Source-Anschluß SRE auf Masse liegt. Ein Drain-Anschluß DA des FET-Transistors T ist über eine erste Arbiter-Leitung AL1 des bidirektionalen Busarbiter-Anschluß BAA an der ersten Pegelleitung LP1 des Identifikationsbusses IDB angeschlossen. Diese wiederum ist über einen externen ersten Lastwiderstand PU1 mit einer externen Spannungsquelle V verbunden. Die Pull-Up-Funktion des externen Lastwiderstandes PU1 kann auch in einer alternativen Art und Weise realisiert werden. So ist es bspw. möglich, diese passiv - mittels einer "depletion load" - oder aktiv - durch ein dynamisches Hochziehen des Spannungspegels der Pegelleitung PL1 während eines Halbtaktes eines Systemtaktes ST des Multimastersystems - zu erreichen. Ein zweiter Eingang XG'' des NEXOR-Gatters XG ist an die erste Pegelleitung LP1 angeschlossen. Ein Ausgang XGA des NEXOR-Gatters XG liegt an einem ersten Eingang G3' eines dritten UND-Gatters G3, dessen zweiten Eingang G3'' das an dem Steuereingang SE der Logikschaltung LS1 auftretende Steuersignal TS1 zugeführt wird. Ein Ausgang G3A des dritten UND-Gatters G3 ist mit einem Steuerausgang SA der Logikschaltung LS1 verbunden.

Die zweite bzw. die dritte Logikschaltung LS2 bzw. LS3 unterscheidet sich von der ersten Logikschaltung LS1 in folgenden drei Punkten: Dem zweiten Eingang G1'' des ersten UND-Gatters G1 wird das zweit-höchstwertige Bit SMSB bzw. das niedrigstwertige Bit LSB des Identifikationswortes IDW zugeführt. Zwischen dem Ausgang G1A des ersten UND-Gatters G1 und dem ersten Eingang G2' des zweiten UND-Gatters G2 ist ein Verzögerungsglied Z bzw. ZZ angeordnet, welches das an seinem Eingang Z' bzw. ZZ' anliegende Signal um einen Takt (Logikschaltung LS2) bzw. zwei Takte (Logikschaltung LS3) des die Signalverarbeitung des Multimastersystems steuernden Systemtaktes ST verzögert. Der Drain-Anschluß DA des FET-Transistors T der zweiten bzw. der dritten Logikschaltung LS2 bzw. LS3 ist über eine zweite bzw. dritte Arbiter-Leitung AL2 bzw. AL3 an der zweiten bzw. dritten Pegelleitung LP2 bzw. LP3 des Identifikationsbusses IDB angeschlossen. Diese wiederum sind über einen zweiten bzw. dritten Lastwiderstand PU2 bzw. PU3 mit der externen Spannungsquelle V verbunden.

Dem Steuereingang SE der ersten Logikschaltung LS1 wird ein erstes Steuersignal TS1 zugeführt, welches permanent den logischen Wert "1" aufweist. Es ist aber auch möglich, dem Steuereingang SE ein externes Steuersignal (z.B. ein chip-select-Signal) zuzuführen, welches die erste Logikschaltung LS1 entsprechend triggert. Zwischen dem Steuerausgang SA der ersten bzw. zweiten Logikschaltung LS1 bzw. LS2 und dem Steuereingang SE der zweiten bzw. dritten Logikschaltung LS2 bzw. LS3 ist jeweils ein weiteres Verzögerungsglied ZW geschaltet, welches das an seinem Eingang ZW' anliegende Steuersignal TS2 bzw. TS3 derart verzögert, daß das Steuersignal TS2 bzw. TS3 am Ende des ersten bzw. zweiten Systemtakts ST1 bzw. ST2 am Steuereingang SE der zweiten bzw. dritten Logikschaltung LS2 bzw. LS3 auftritt. Der Steuerausgang SA der dritten Logikschaltung LS3 - an dem das Gewährungssignal MBGT auftritt - ist mit einem entsprechenden Eingang des Masters M verbunden.

Die Verallgemeinerung der Priorisierungslogik PL auf den allgemeinen Fall eines k Bit breiten Identifikationswortes IDW ist leicht durchführbar: Die Priorisierungslogik PL weist dann k parallel angeordnete Logikschaltungen LS1-LSk auf. Dem zweiten Eingang G1'' des ersten UND-Gatters G1 der ersten (zweiten, ..., k-ten) Logikschaltung LS1 (LS2-LSk) wird jeweils das höchstwertige (zweit-höchstwertige, ..., niedrigstwertige) Bit MSB (SMSB, ..., LSB) des Identifikationswortes IDW zugeführt. Das dem Ausgang G1A des ersten UND-Gatters G1 einer jeden Logikschaltung LS nachgeschalteten Verzögerungsgliedes Z der zweiten (dritten, vierten, etc.) Logikschaltung LS2 (LS3-LSk) weist eine Verzögerungszeit von einem (zwei, drei, ..., k-1) Systemtakten ST auf. Der Drain-Anschluß DA des FET-Transistors T der ersten (zweiten, dritten, etc.) Logikschaltung LS1-LSk ist über je eine Arbiter-Leitung AL1-ALk mit der ersten (zweiten, dritten, ..., k-ten) Pegelleitung LP1 (LP2-LPk) des Identifikationsbusses IDB verbunden. Zwischen den Steuerausgängen SA und dem Steuereingang SE der darauffolgenden Logikschaltung ist jeweils das weitere Verzögerungsglied ZW geschaltet. Der Steuerausgang SA der k-ten Logikschaltung LSk ist mit dem zugeordneten Master M verbunden.

Die beschriebene Ausführungsform der Priorisierungslogik PL ist für ein Verfahren zur Busarbitration mit überlappenden Buszuteilungszyklen ausgelegt, bei dem die logische 0 gegenüber der logischen 1 auf den Pegelleitungen LP1-LPk des Identifikationsbusses IDB dominieren soll. Um die beschriebene Priorisierungslogik PL für ein Verfahren zu adaptieren, bei dem die logische 1 der logischen 0 vorgeht, ist es z.B. möglich, dem nicht-invertierenden Ausgangs G2A des zweiten UND-Gatters G2 einer jeden Logikschaltung LS durch einen invertierenden Ausgang zu ersetzen.

Die Priorisierungslogik PL ist auch zur Busarbitration mit nicht-überlappenden Buszuteilungszyklen (erste Ausführungsform des Verfahrens) einsetzbar: In diesem Fall sind alle Arbiter-Leitungen AL1-ALk des Busarbiter-Anschlusses BAA an einer einzigen Pegelleitung - z.B. der Pegelleitung LP1 - des Identifikationsbusses IDB angeschlossen.

Die Arbeitsweise der Priorisierungslogik PL wird anhand der im ersten Buszuteilungszyklus BZ1 stattfindenden Busarbitration beschrieben: Die Funktionsweise der Logikschaltung LS der Priorisierungslogik PL ist dem Fachmann aufgrund der bekannten logischen Funktionen der hierbei verwendeten Bauelemente bekannt, so daß eine detaillierte Beschreibung der in den Logikschaltungen LS stattfindenden Signalverarbeitung nicht notwendig ist.

Am Gate-Anschluß GE des FET-Transistors T der ersten Logikschaltung LS1 einer jeden Priorisierungslogik PL1-PL4 tritt im ersten Systemtakt ST1 ein logisches Signal von 1,1,0,1 auf. Durch das "open-drain"-Verhalten der Drain-Anschlüsse DA der FET-Transistoren T nimmt die erste Pegelleitung LP1 des Identifkationsbusses IDB den logischen Pegel LP1=0 an. Dieser wird über die erste Arbiter-Leitung AL1 der bidirektionalen Busarbiter-Anschlüsse BAA1-BAA4 der vier Priorisierungslogiken PL1-PL4 zurückgelesen und zum weiten Eingang XG'' des NEXOR-Gatters XG geführt, welches die Koinzidenzprüfung zwischen dem logischen Pegel der ersten Pegelleitung LP1 und dem entsprechenden höchstwertigen Bits MSB1-MSB4 der vier Identifikationsworte IDW1-IDW4 durchführt. Da der logische Pegel der ersten Pegelleitung LP1=0 mit den höchstwertigen Bit MSB1, MSB2 und MSB4 der entsprechenden Identifikationsworte IDW1, IDW2 und IDW4 übereinstimmt, tritt am Ausgang XGA der entsprechenden NEXOR-Gatter XG das Steuersignal TS2=1 auf, welches den logischen Wert 1 aufweist. Am Steuerausgang SA der ersten Logikschaltung LS1 der dritten Priorisierungslogik PL3 tritt hingegen - entsprechend der Antikoinzidenz zwischen dem logischen Pegel LP1=0 der ersten Pegelleitung LP1 und dem MSB3 - das Steuersignal TS2=0 auf.

Im darauffolgenden zweiten Systemtakt ST2 wird das zweit-höchstwertige Bit SMSB1-SMSB4 der vier Identifikationsworte IDW1-IDW4 jeweils dem zweiten Eingang G1'' des ersten UND-Gatters G1 der zweiten Logikschaltung LS2 der vier Priorisierungslogiken PL1-PL4 zugeführt. Die in den Logikschaltungen LS2 der ersten, zweiten und vierten Priorisierungslogik PL1, PL2 und PL4 stattfindende Signalverarbeitung weist gegenüber der diesen Logikschaltungen im ersten Priorisierungsschritt stattfindenden Signalverarbeitungsoperationen keine weiteren Besonderheiten auf, so daß sich weitere Ausführungen hierzu erübrigen.

In der zweiten Logikschaltung LS2 der Priorisierungslogik PL3 des dritten Busarbiters BA3, welcher im ersten Priorisierungsschritt aus der Busarbitration des ersten Buszuteilungszyklusses BZ1 ausscheidet, findet hingegen folgende Signalverarbeitung statt: Am ersten Eingang G2' des zweiten UND-Gatters G2 liegt das Steuersignal TS2=0 an, dessen binärer Wert "0" charakterisiert, daß der Busarbiter BA3 bereits aus der Busarbitration ausgeschieden ist. Das Steuersignal TS2=0 bewirkt, daß am Ausgang G2A des zweiten UND-Gatters G2 der zweiten Logikschaltung LS2 unabhängig vom binären Wert des zweit-höchstwertigen Bits SMSB3 ein Ausgangssignal auftritt, welches den Wert "0" aufweist. Der FED-Transistor T der zweiten Logikschaltung LS2 wird daher über das an seinem Gate-Anschluß GE anliegende Ausgangssignal des zweiten UND-Gatters G2 nicht durchgeschaltet, so daß das Bit SMSB3 den sich auf der zweiten Pegelleitung LP2 einstellenden logischen Pegel nicht beeinflußen kann. Der Busarbiter BA3 ist somit von der Busarbitration abgekoppelt.

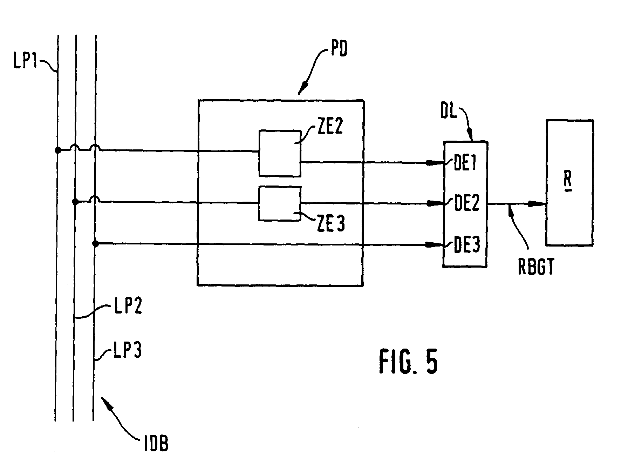

In Fig. 5 ist ein Prioritätsdetektor PD dargestellt, welcher zur Erkennung des auf dem Identifikationsbus IDB übertragenen, k=3 Bit breiten Identifikationswortes IDW des priorisierten Masters M dient. Der Prioritätsdetektor PD parallelisiert das in drei (allgemein: k) aufeinanderfolgenden Systemtakten ST1-ST3 (ST1-STk) bitweise übertragene Identifikationswort IDW des priorisierten Masters M und wertet dieses in einer Detektorlogik DL aus. Zur Parallelisierung der drei seriell übertragenen Bits MSB, SMSB und LSB des Identifikationswortes IDW dienen eine erste und eine zweite Verzögerungseinheit ZE2 und ZE3. Die mit der ersten logischen Pegelleitung LP1 des Identifikationsbusses IDB verbundene erste Verzögerungseinheit ZE2 weist eine Verzögerungszeit von zwei Systemtakten ST auf.

Bei der mit der zweiten logischen Pegelleitung LP2 des Identifikationsbusses IDB verbundene zweite Verzögerungseinheit ZE3 ist eine Verzögerung von einem Systemtakt ST vorgesehen. Das niedrigstwertige Bit LSB des Identifikationswortes wird unverzögert durchgeschaltet: Die drei Bits des Identifikationsworte IDW treten dadurch nach jeweils drei Systemtakten ST parallel an den Eingängen DLE1-DLE3 der Detektorlogik DL des Prioritätsdetektors PD auf. Bei einer Koinzidenz zwischen dem auf dem Identifikationsbus IDB übertragenen Identifikationswort IDW und der in der Detektorlogik DL gespeicherten Kennung erzeugt diese ein Empfänger-Gewährungssignal RBGT, welches den dem Prioritätsdetektor PD zugeordneten Empfänger R veranlaßt, auf die vom priorisierten Master M auf dem Datenbus DB übertragenen Daten zuzugreifen.

Die Verallgemeinerung des Prioritätsdetektors PD auf dem allgemeinen Fall eines k Bit breiten Identifikationswortes IDW ist leicht möglich: Die Detektorlogik DL des Prioritätsdetektors PL weist dann k-1 Verzögerungseinheiten ZE2-ZEk mit unterschiedliche Verzögerungszeiten auf, derart, daß die dem höchstwertigen Bit MSB des Identifkationswortes IDW zugeordneten Verzögerungseinheit ZE1 der Detektorlogik DL eine Verzögerungszeit von k-1 Systemtakten, das die dem zweit-höchstwertigen Bits SMSB des Identifikationswortes ID zugeordnete Verzögerungseinheit ZE2 eine Verzögerung von k-2 Systemtakten, etc. aufweist.

## Patentansprüche

1. Verfahren zur Busarbitration eines Multimastersystems, das mehrere auf einen globalen Datenbus (DB) zugreifende Master (M1-Mm) und mehrere auf einen globalen Identifikationsbus (IDB) zugreifende Busarbiter (BA1-BAm) aufweist, bei dem ein jeder an der Busarbitration eines Buszuteilungszyklusses (BZ1-BZ5) teilnehmende Busarbiter (BA1-BA4) ein Busanforderungssignal (BRQT1-BRQT4) auf den Identifikationsbus (IDB) legt, das ein k Bit breites, die Priorität des dem Busarbiter (BA1-BAm) zugewiesenen Masters (M1-Mm) repräsentierendes Identifikationswort (IDW1-IDW4) enthält, bei dem in einem jeden Priorisierungsschritt des Buszuteilungszyklusses (BZ1-BZ5) auf dem Identifikationsbus (IDB) durch eine logisches Verknüpfung gleichwertiger Bits (MSB1-MSB4;SMSB1-SMSB4;LSB1-LSB4) der Identifikationsworte (IDW1-IDW4) ein logischer Pegel (LP1;LP2;LP3) erzeugt wird, und bei dem in einem jeden Priorisierungsschritt der logische Pegel (LP1;LP2;LP3) des Identifikationsbusses (IDB) mit den korrespondierenden Bits der Identifikationsworte (IDW1-IDW4) verglichen wird, **dadurch gekennzeichnet,** daß die k Bits der Identifikationsworte (IDW1-IDW4) der an der Busarbitration des Buszuteilungszyklusses (BZ1 bzw. BZ2 bzw. BZ3) teilnehmenden Busarbiter (BA1-BA4) zeitlich versetzt auf den Identifikationsbus (IDB) gelegt werden, daß in einem jeden Priorisierungsschritt des Buszuteilungszyklusses (BZ1-BZ4) jeweils nur diejenigen Bits der Identifikationsworte (IDW1-IDW4) auf den Identifikationsbus (IDB) gelegt werden, die eine gleiche binäre Wertigkeit aufweisen, und daß in jedem Priorisierungsschritt des Buszuteilungszyklusses (BZ1-BZ4) diejenigen Busarbiter (BA1-BA4) aus der Busarbitration dieses Buszuteilungszyklusses (BZ1-BZ4) ausscheiden, bei denen das in diesem Priorisierungsschritt auf den Identifikationsbus (IDB) gelegte Bit des eigenen Identifikationswortes (IDW1-IDW4) nicht mit dem logischen Pegel (LP) des Identifikationsbusses (IDB) übereinstimmt.

2. Verfahren nach Anspruch 1, dadurch gekennzeichnet, daß gleichzeitig zu einem Priorisierungsschritt eines ersten Buszuteilungszyklusses (BZ1) ein Priorisierungsschritt eines zweiten Buszuteilungszyklusses (BZ2 bzw. BZ3) durchgeführt wird.

3. Verfahren nach Anspruch 2, dadurch gekennzeichnet, daß gleichzeitig k Priorisierungsschritte von k aufeinanderfolgenden Buszuteilungszyklen (BZ1-BZ3) durchgeführt werden.

4. Verfahren nach einem der Ansprüche 1 bis 3, dadurch gekennzeichnet, daß die einzelnen Bits (MSB,SMSB,LSB) der Identifikationsworte in absteigender Wertigkeit auf den Identifkationsbus (IDB) gelegt werden.

5. Verfahren nach einem der Ansprüche 1 bis 4, dadurch gekennzeichnet, daß die Verknüpfung der auf den Identifikationsbus (IDB) gelegten Bits (MSB,SMSB,LSB) der Identifikationsworte (IDW) durch eine logische UND-Verknüpfung erfolgt.

6. Verfahren nach einem der Ansprüche 1 bis 4, dadurch gekennzeichnet, daß die logische Verknüpfung der auf dem Identifikationsbus (IDB) übertragenen Bits (MSB,SMSB,LSB) der Identifikationsworte (IDW1-IDW4) durch eine logische ODER-Verknüpfung erfolgt.

7. Priorisierungslogik für einen Busarbiter eines Multimastersystems, **dadurch gekennzeichnet**, daß k parallel angeordnete Logikschaltungen (LS1-LS3) vorgesehen sind, denen jeweils ein Bit (MSB,SMSB,LSB) eines Identifikationswortes (IDW1-IDW4) zugeführt wird, daß ein Ausgang (DA) einer jeden Logikschaltung (LS1-LS3) über eine Arbiter-Leitung (AL1-AL3) je eines Busarbiter-Anschlußes (BAA1-BAA3) mit einem Identifikationsbus (IDB) verbunden ist, und daß zwischen dem Steuerausgang (SA) einer jeden Logikschaltung (LS1-LS3) und dem Steuereingang (SE) der benachbarten Logikschaltung (LS2-LS3) ein Verzögerungsglied (ZW) angeordnet ist.

8. Priorisierungslogik nach Anspruch 7, dadurch gekennzeichnet, daß jede Logikschaltung (LS1-LS3) ein erstes UND-Gatter (G1) aufweist, dessen ersten Eingang (G1') ein Busanforderungssignal (MBRQ) des anfordernden Masters (M) des Busarbiters (BA) zugeführt wird, und an dessen zweiten Eingang (G1'') ein Bit (MSB;SMSB;LSB) des Identifikationswortes (IDW) zugeführt wird, daß ein Ausgang (G1A) des ersten UND-Gatters zu einem invertierenden ersten Eingang (G2') eines zweiten UND-Gatters (G2) geführt wird, dessen zweiter Eingang (G2") mit dem Steuereingang (SE) der Logikschaltung (LS1-LS3) verbunden ist, daß der Ausgang (G2A) des zweiten UND-Gatters (G2) an einen Gate-Eingang (GE) eines Feldeffekttransistors (T) geführt wird, dessen Source-Anschluß (SRE) auf Masse liegt, daß ein Drain-Anschluß (DA) des Feldeffekttransistors (T) über die Arbiter-Leitung (AL1-ALk) des bidirektionalen Busarbiter-Anschlußes (BAA1-BAA3) an den Identifikationsbus (IDB) angeschlossen ist, daß ein NEXOR-Gatter (XG) vorgesehen ist, dessen erster Eingang (XG') mit dem Ausgang (G1A) des ersten UND-Gatters (G1) verbunden ist, und dessen zweiter Eingang (XG") mit dem Identifikationsbus (IDB) verbunden ist, daß ein Ausgang (XGA) des NEXOR-Gatters (XG) an einen ersten Eingang (G3') eines dritten UND-Gatters (G3) anliegt, dessen zweiter Eingang (G3") mit dem Steuereingang (SE) der Logikschaltung (LS) verbunden ist, und daß ein Ausgang (G3A) des dritten UND-Gatters (G3) mit dem Steuerausgang (SA) der Logikschaltung (LS) verbunden ist.

9. Priorisierungslogik nach Anspruch 7, dadurch gekennzeichnet, daß k-1 Logikschaltungen (LS2,LS3) der Priorisierungslogik (PL) jeweils ein Verzögerungsglied (Z, ZZ) aufweisen, das zwischen dem Ausgang (G1A) des ersten UND-Gatters (G1) und dem invertierenden ersten Eingang (G2') des zweiten UND-Gatters (G2) geschaltet ist, und daß sich die Verzögerungszeit zweier benachbarter Verzögerungsglieder (Z,ZZ) um einen Takt eines die Signalverarbeitung des Multimastersystems steuernden Systemtaktes (ST) unterscheidet.

10. Priorisierungslogik nach Anspruch 8 oder 9, dadurch gekennzeichnet, daß alle Arbiter-Leitungen (AL1-AL3) jeder Logikschaltung (LS1-LS3) an eine erste Pegelleitung (LP1) des Identifikationsbusses (IDB) angeschlossen ist.

11. Priorisierungslogik nach Anspruch 8 oder 9, dadurch gekennzeichnet, daß je eine Arbiter-Leitung (AL1-AL3) einer Logikschaltung (LS1-LS3) der Priorisierungslogik (PL) an je eine Pegelleitung (LP1-LP3) des Identifikationsbusses (IDB) angeschlossen ist.

12. Priorisierungslogik nach einem der Ansprüche 8 bis 11, dadurch gekennzeichnet, daß der Ausgang (G2A) des zweiten UND-Gatters (G2) einer jeden Logikschaltung (LS1-LS3) der Priorisierungslogik (PL) als ein invertierender Ausgang ausgebildet ist.

13. Prioritätsdetektor für ein Multimastersystem, dadurch gekennzeichnet, daß
- eine Vorrichtung zur Parallelisierung der seriell auf einem Identifikationsbus übertragenen k Bits (MSB,SMSB,LSB) des Identifikationswortes (IDW1-IDW4) eines Masters (M1-M4) vorgesehen ist, die einer Detektorlogik (DL) des Prioritätsdetektors (PD) vorgeschaltet ist, wobei
- die Vorrichtung zur Parallelisierung des Identifikationswortes (IDW1-IDW4) k-1 parallel angeordneten Verzögerungseinheiten (ZE2;ZE3) und eine direkte Verbindungsleitung enthält, die jeweils mit einer Pegelleitung (LPI; LP2; LP3) des Identifikationsbusses (IDB) verbunden sind, und
- die Verzögerungszeiten benachbarter Verzögerungseinheiten (ZE2, ZE3) einschließlich der direkten Verbindungsleitung sich um einen Takt des die Signalverarbeitung des Multimastersystems steuernden Systemtaktes (ST) unterscheiden, und
- mittels eines von der Detektorlogik (DL) abgegebenen Empfänger-Gewährungssignals (RBGT) ein Empfänger (R) veranlaßt ist, auf die vom priorisierten Master (M1-M4) auf einem Datenbus (DB) übertragenen Daten zuzugreifen.

## Claims

1. Bus arbitration method for a multimaster system comprising a plurality of masters (M1-Mm) sharing a global data bus (DB) and a plurality of bus arbiters (BA1-BAm) sharing a global identification bus (IDB) wherein each bus arbiter (BA1-BA4) involved in the bus arbitration of a bus grant cycle (BZ1-BZ5) applies to the identification bus (IDB) a bus request signal (BRQT1-BRQT4) containing a k-bit-wide identification word (IDW1-IDW4) representative of the priority of the master (M1-Mm) associated with the bus arbiter (BA1-BAm), wherein in each prioritization step of the bus grant cycle (BZ1-BZ5), a logic level (LP1; LP2; LP3) is produced on the identification bus (IDB) by applying a logic operation to bits (MSB1-MSB4; SMSB1-SMSB4; LSB1-LSB4) of the identification words (IDW1-ISW4) which are of equal significance, and wherein in each prioritization step, the logic level (LP1; LP2; LP3) of the identification bus (IDB) is compared with the corresponding bits of the identification words (IDW1-IDW4), **characterized in** that the k bits of the identification words (IDW1-IDW4) of the bus arbiters (BA1 - BA4) involved in the bus arbitration of the bus grant cycle (BZ1, BZ2, BZ3) are placed on the identification bus (IDB) on a time-graded basis, that in each prioritization step of the bus grant cycle (BZ1-BZ4), only those bits of the identification words (IDM1-IDM4) are placed on the identification bus (LDB) which are of equal significance, and that in each prioritization step of the bus grant cycle (BZ1-BZ4), those bus arbiters (BA1-BA4) in the case of which that bit of the respective identification word (IDW1-IDW4) which is placed on the identification bus (IDB) in said prioritization step does not match the logic level (LP) of the identification bus (IDB) are eliminated from the bus arbitration of said bus grant cycle (BZ1-BZ4).

2. A method as claimed in claim 1, characterized in that simultaneously with a prioritization step of a first bus grant cycle (BZ1), a prioritization step of a second bus grant cycle (BZ2, BZ3) is performed.

3. A method as claimed in claim 2, characterized in that k prioritization steps of k successive bus grant cycles (BZ1-BZ3) are performed simultaneously.

4. A method as claimed in any one of claims 1 to 3, characterized in that the individual bits (MSB, SMSB, LSB) of the identification words are placed on the identification bus (IDB) in a descending sequence of significance.

5. A method as claimed in any one of claims 1 to 4, characterized in that the logic operation applied to those bits (MSB, SMSB, LSB) of the identification words (IDB) which are placed on the identification bus (IDB) is an AND operation.

6. A method as claimed in any one of claims 1 to 4, characterized in that the logic operation applied to those bits (MSB, SMSB, LSB) of the identification words (IDW1-IDW4) which are placed on the identification bus (IDW) is an OR operation.

7. Prioritization logic for a bus arbiter of a multimaster system, **characterized in** that k parallel-connected logic circuits (LS1-LS3) are provided each of which is supplied with one bit (MSB, SMSB, LSB) of an identification word (IDW1-IDW4), that an output (DA) of each logic circuit (LS1-LS3) is connected via an arbiter line (AL1-AL3) of a bus arbiter connection (BAA1-BAA3) to an identification bus (IDB), and that a delay element (ZW) is inserted between the control output (SA) of each logic circuit (LS1-LS3) and the control input (SE) of the adjacent logic circuit (LS2-LS3).

8. A prioritization logic as claimed in claim 7, characterized in that each logic circuit (LS1-LS3) includes a first AND gate (G1) whose first input (G1') is supplied with a bus request signal (MBRQ) from the requesting master (M) of the bus arbiter (BA) and whose second input (G1") is supplied with a bit (MSB; SMSB; LSB) of the identification word (IDW), that an output (G1A) of the first AND gate is coupled to an inverting first input (G2") of a second AND gate (G2) having its second input (G2") connected to the control input (SE) of the logic circuit (LS1-LS3), that the output (G2A) of the second AND gate (G2) is coupled to a gate terminal (GE) of a field-effect transistor (T) whose source terminal (SRE) is grounded, that a drain terminal (DA) of the field-effect transistor (T) is connected via the arbiter line (AL1-ALk) of the bidirectional bus arbiter connection (BAA1-BAA3) to the identification bus (IDB), that an EXNOR gate (XG) is provided whose first input (XG') is connected to the output (G1A) of the first AND gate (G1), and whose second input (XG") is connected to the identification bus (IDB), that an output (XGA) of the EXNOR gate (XG) is coupled to a first input (G3') of a third AND gate (G3) having its second input (G3") connected to the control input (SE) of the logic circuit (LS), and that an output (G3A) of the third AND gate (G3) is connected to the control output (SA) of the logic circuit (LS).

9. A prioritization logic as claimed in claim 7, characterized in that each of k-1 logic circuits (LS2, LS3) of the prioritization logic (PL) includes a delay element (Z, ZZ) which is connected between the output (G1A) of the first AND gate (G1) and the inverting first input (G2') of the second AND gate (G2), and that the delays of two adjacent delay elements (Z, ZZ) differ by one clock period of a system clock (ST) controlling the signal-processing operations of the multimaster system.

10. A prioritization logic as claimed in claim 8 or 9, characterized in that the arbiter lines (AL1-AL3) of all logic circuits (LS1, LS3) are connected to a first level line (LP1) of the identification bus (IDB).

11. A prioritization logic as claimed in claim 8 or 9, characterized in that the arbiter line (AL1-AL3) of each logic circuit (LS1-LS3) of the prioritization logic (PL) is connected to a respective level line (LP1-LP3) of the identification bus (IDB).

12. A prioritization logic as claimed in any one of claims 8 to 11, characterized in that the output (G2A) of the second AND gate (G2) of each logic circuit (LS1-LS3) of the prioritization logic (PL) is designed as an inverting output.

13. Priority detector for a multimaster system,
**characterized in** that
- a device for converting the k bits (MSB, SMSB, LSB) of the identification word (IDW1-IDW4) of a master (M1-M4), which are transferred over an identification bus in serial form, to parallel form is connected ahead of a detector logic (DL) of the priority detector (PD),
- said device for converting the identification word (IDW1-IDW4) to parallel form comprising k-1 parallel delay units (ZE2; ZE3) each connected by a direct connecting line to a respective level line (LP1; LP2; LP3) of the identification bus (IDB),
- the delays of adjacent delay units (ZE2, ZE3), including the direct connecting line, differing by one period of the system clock (ST) controlling the signal processing of the multimaster system, and
- a receiver (R) being caused by a receiver grant signal (RBGT) provided by the detector logic (DL) to access the data transferred from the prioritized master (M1-M4) to a data bus (DB).

## Revendications

1. Procédé pour l'arbitrage des accès au bus d'un système à maîtres multiples qui comporte plusieurs maîtres (M1-Mm) se raccordant à un bus global de données (DB) et plusieurs arbitres d'accès au bus (BA1-BAm) se raccordant à un bus global d'identification (IDB) et dans lequel chaque arbitre d'accès au bus (BA1-BA4) participant à l'arbitrage des accès au bus d'un cycle de partage de bus (BZ1-BZ5) envoie, sur le bus d'identification (IDB), un signal de demande de bus (BRQT1-BRQT4) qui contient un mot d'identification (IDW1-IDW4) de k bits représentant la priorité du maître (M1-Mm) assigné à l'arbitre d'accès au bus (BA1-BAm), dans lequel, dans chaque étape de détermination de la priorité du cycle de partage de bus (BZ1-BZ5), on produit, sur le bus d'identification (IDB), au moyen d'une combinaison logique de bits de même poids (MSB1-MSB4 ; SMSB1-SMSB4 ; LSB1-LSB4) du mot d'identification (IDW1-IDW4), un niveau logique (LP1 ; LP2 ; LP3) et dans lequel, dans chaque étape de détermination de la priorité, le niveau logique (LP1 ; LP2; LP3) du bus d'identification (IDB) est comparé avec les bits correspondants du mot d'identification (IDW1-IDW4), **caractérisé en ce que** les k bits du mot d'identification (IDW1-IDW4) des arbitres d'accès au bus (BA1-BAm) participant à l'arbitrage des accès au bus d'un cycle de partage de bus (BZ1-BZ5) sont envoyés sur le bus d'identification (IDB) avec un décalage dans le temps, en ce que, dans chaque étape de détermination de la priorité du cycle de partage de bus (BZ1-BZ4), on n'envoie sur le bus d'identification (IDB) que les bits des mots d'identification (IDW1-IDW4) qui présentent un poids binaire égal et en ce que, dans chaque étape de détermination de la priorité du cycle de partage de bus (BZ1-BZ4), on exclut de l'arbitrage des accès au bus de ce cycle de partage de bus (BZ1-BZ4) les arbitres d'accès au bus (BA1-BA4) pour lesquels le bit du mot d'identification spécifique (IDW1-IDW4) qui est envoyé au bus d'identification (IDB) pendant cette étape de détermination de la priorité ne correspond pas au niveau logique (LP) du bus d'identification (IDB).

2. Procédé selon la revendication 1, caractérisé en ce que, en même temps que qu'une étape de détermination de la priorité d'un premier cycle de partage de bus (BZ1), on exécute une étape de détermination de la priorité d'un deuxième cycle de partage de bus (BZ2 ou BZ3).

3. Procédé selon la revendication 2, caractérisé en ce que l'on exécute en même temps k étapes de détermination de la priorité de k cycles de partage de bus (BZ1-BZ3).

4. Procédé selon l'une quelconque des revendications 1 à 3, caractérisé en ce que les différents bits (MSB, SMSB, LSB) des mots d'identification sont envoyés sur le bus d'identification (IDB) par ordre décroissant

5. Procédé selon l'une quelconque des revendications 1 à 4, caractérisé en ce que la combinaison logique des bits (MSB, SMSB, LSB) des mots d'identification (IDW) envoyés sur le bus d'identification (IDB) est réalisé par un circuit logique ET.

6. Procédé selon l'une quelconque des revendications 1 à 4, caractérisé en ce que la combinaison logique des bits (MSB, SMSB, LSB) des mots d'identification (IDW) envoyés sur le bus d'identification (IDB) est réalisé par un circuit logique OU.

7. Logique de détermination de la priorité pour un arbitre d'accès au bus d'un système à maîtres multiples, **caractérisé en ce que** l'on prévoit k circuits logiques (LS1-LS3) disposés en parallèle à chacun desquels on envoie un bit (MSB, SMSB, LSB) d'un mot d'identification (IDW1-IDW4), en ce qu'une sortie (DA) de chacun des circuits logiques (LS1-LS3) est reliée à un bus d'identification (IDB) par l'intermédiaire d'une ligne d'arbitrage (AL1-AL3) faisant partie, à chaque fois, d'une connexion d'arbitrage de bus (BAA1-BAA3) et en ce que, entre l'entrée de commande (SA) de chacun des circuits logiques (LS1-LS3) et l'entrée de commande (SE) du circuit logique voisin (LS1-LS3) est disposé un élément à retard (Z).

8. Logique de détermination de la priorité selon la revendication 7, caractérisé en ce que chaque circuit logique (LS1-LS3) comporte une première porte ET (G1) à la première entrée (G1') de laquelle est envoyé un signal de demande de bus (MBRQ) du maître (M) appelant de l'arbitre d'accès au bus (BA) et à la deuxième entrée de laquelle est envoyé un bit (MSB, SMSB, LSB) du mot d'identification (IDW), en ce qu'une sortie (G1A) de la première porte ET est envoyée sur une première entrée inverseuse (G2') d'une deuxième porte ET (G2) dont la deuxième entrée (G2') est reliée à l'entrée de commande (SE) du circuit logique (LS1-LS3), en ce que la sortie de la deuxième porte ET (G2A) est amenée à une entrée de gate (GE) d'un transistor à effet de champ (T) dont la borne de source (SRE) est à la masse, en ce qu'une borne de drain (DA) du transistor à effet de champ (T) est relié au bus d'identification (IDB) par l'intermédiaire de la ligne d'arbitrage (AL1-ALk) de la connexion bidirectionnelle d'arbitre d'accès au bus (BAA1-BAA3), en ce que l'on prévoit une porte NON-OU (XG) dont la première entrée (XG') est reliée à la sortie (G1A) de la première porte ET (G1) et dont la deuxième entrée (XG") est reliée au bus d'identification (IDB), en ce que une sortie (XGA) de la porte NON-OU (XG) est reliée à une première entrée d'une troisième porte ET (G3) dont la deuxième entrée (G3") est reliée à l'entrée de commande (SE) du circuit logique (LS) et en ce qu'une sortie (G3A) de la troisième porte ET (G3) est reliée à l'entrée de commande (SA) du circuit logique (LS).

9. Logique de détermination de la priorité selon la revendication 7, caractérisé en ce que k-1 circuits logiques (LS2, LS3) comportent chacun un élément à retard (Z, ZZ) qui est branché entre la sortie (G1A) de la première porte ET (G1) et la première entrée inverseuse (G2') de la deuxième porte ET (G2) et en ce que les temps de retard de deux éléments de retard voisins (Z, ZZ) différent d'une période de l'horloge de système qui pilote le traitement de signal du système à maîtres multiples.

10. Logique de détermination de la priorité selon la revendication 8 ou 9, caractérisé en ce que chaque ligne d'arbitrage (AL1-AL3) de chaque circuit logique (LS1-LS3) est reliée à une première ligne de niveau (LP1) du bus d'identification (IDB).

11. Logique de détermination de la priorité selon la revendication 8 ou 9, caractérisé en ce que chaque ligne d'arbitrage (AL1-AL3) d'un circuit logique (LS1-LS3) de la logique de détermination de la priorité est relié , à chaque fois, à une ligne de niveau (LP1-LP3)du bus d'identification (IDB).

12. Logique de détermination de la priorité, selon l'une quelconque des revendications 8 à 11, caractérisé en ce que la sortie (G2A) de la deuxième porte ET (G2) de chacun des circuits logiques (LS1-LS3) de chaque logique de priorité (PL) est réalisé en sortie inverseuse.

13. Détecteur de priorité pour un système à maîtres multiples, caractérisé en ce que
on prévoit un dispositif pour la mise en parallèle des k bits (MSB, SMSB, LSB), transmis en série sur un bus d'identification, du mot d'identification (IDW1-IDW4) d'un maître (M1-M4) qui est branché en aval d'une logique du détecteur de priorité (PD),
le dispositif pour la mise en parallèle du mot d'identification (IDW1-IDW4) contenant k-1 unités de retard (ZE2 ; ZE3) disposées en parallèle et une ligne de liaison directe qui , à chaque fois, sont reliées à une ligne de niveau (LP1 ; LP2 ; LP3) du bus d'identification (IDB), et
- les temps de retard d'unités à retard voisines (ZE2 ; ZE3), y compris la ligne de liaison directe, différent d'une période de l'horloge de système (ST) qui pilote le traitement de signal du système à maîtres multiples, et
- un récepteur (R) étant déclenché pour prélever les données transmises par le maître ayant eu la priorité (ML1-M4) sur un bus de données (DB) au moyen d'un signal d'affectation de récepteur (RBGT)délivré par la logique de détection (DL).
